# EUROPÄISCHE PATENTSCHRIFT

(11) **EP 1 805 426 B1**
(45) Veröffentlichungstag und Bekanntmachung des Hinweises auf die Patenterteilung: **27.08.2008**
(21) Anmeldenummer: 05772508.7
(22) Anmeldetag: 28.07.2005
(51) Int. Cl.: F16B 19/00

(54) **VORRICHTUNG ZUM ABDECKEN EINER AUSNEHMUNG IN EINEM TRÄGERTEIL**
DEVICE FOR COVERING A RECESS IN A CARRIER PART
DISPOSITIF DE COUVERTURE D'UNE CAVITE DANS UN SUPPORT

(30) Priorität: 22.10.2004 DE 102004051590
(43) Veröffentlichungstag der Anmeldung: 11.07.2007
(73) Patentinhaber: A. RAYMOND ET CIE, 38000 Grenoble (FR)
(72) Erfinder: BOUBTANE, Mohieddine, F-38170 Seyssinet-Pariset (FR)
(74) Vertreter: Rüttgers, Joachim
(86) Internationale Anmeldenummer: PCT/EP2005/008171
(87) Internationale Veröffentlichungsnummer: WO 2006/045363

(56) Entgegenhaltungen:
- FR-A- 1 574 874
- US-A- 4 973 212

## Beschreibung

Die Erfindung betrifft eine Vorrichtung gemäß dem Oberbegriff des Patentanspruches 1.

Aus FR 1 574 874 A ist eine Vorrichtung der eingangs genannten Art bekannt, wobei der Abdeckschirm in relaxierter Anordnung im Wesentlichen rechtwinklig zu der Längsrichtung des Schaftes angeordnet ist und in einer verriegelten Anordnung entgegen der Einführrichtung nach hinten gebogen ist.

Aus US 4,973,212 A ist eine Vorrichtung zum Verbinden eines Trägerteiles und eines Anbauteiles bekannt, bei der ein im Wesentlichen rechtwinklig zu der Längsachse eines Schaftes ausgerichteter Abdeckschirm im Verbindungsbereich zu dem Schaft einen verformbaren Abschnitt aufweist, so dass der Schaft bei verhältnismäßig dicken zu verbindenden Bauteilen gegenüber einem außenseitigen steifen umlaufenden Außenabschnitt des Abdeckschirmes versenkbar ist.

Eine weitere Vorrichtung zum Abdecken einer Ausnehmung in einem Trägerteil ist beispielsweise aus DE 102 45 276 A1 bekannt. Mit dieser Vorrichtung ist nach Einfügen des Schaftes in die Ausnehmung des Trägerteiles und nach Ausüben einer axial wirkenden Einfügekraft unter Eingriff der Rastanordnung mit dem Trägerteil die Ausnehmung mit dem Abdeckschirm abdeckbar. Bei Eingriff der Rastanordnung mit dem Trägerteil wirken auf den Abdeckschirm Verformungskräfte ein, die zu einem verhältnismäßig strammen Sitz des Abdeckschirmes auf der Auflageseite und damit einer ordnungsgemäßen Abdeckung der Ausnehmung führen. Bei einer derartigen Vorrichtung hat sich jedoch herausgestellt, dass bei verhältnismäßig großen Einfügekräften der Abdeckschirm die Neigung hat, sich randseitig aufzubiegen, so dass der Rand des Abdeckschirmes in unerwünschter Art und Weise einen Abstand von der Auflagefläche aufweist.

Der Erfindung liegt die Aufgabe zugrunde, eine Vorrichtung der eingangs genannten Art anzugeben, die sich auch bei hohen Einfügekräften durch eine hohe Dichtigkeit auszeichnet.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung der trichterförmige Abdeckschirm mit einem gegenüber dem relativ steifen Außenabschnitt verhältnismäßig flexiblen Verformungsabschnitt sowie mit einem wiederum relativ steifen Innenabschnitt ausgebildet ist, werden die Verformungskräfte von dem innenliegenden Verformungsabschnitt aufgenommen, und damit wird ein Aufstellen des Außenabschnittes im äußeren Randbereich verhindert.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung,
- Fig. 2: das Ausführungsbeispiel gemäß Fig. 1 in einer Seitenansicht vor dem Eingriff mit einem Trägerteil und
- Fig. 3: das Ausführungsbeispiel gemäß Fig. 1 und Fig. 2 im Schnitt im Eingriff mit dem Trägerteil.

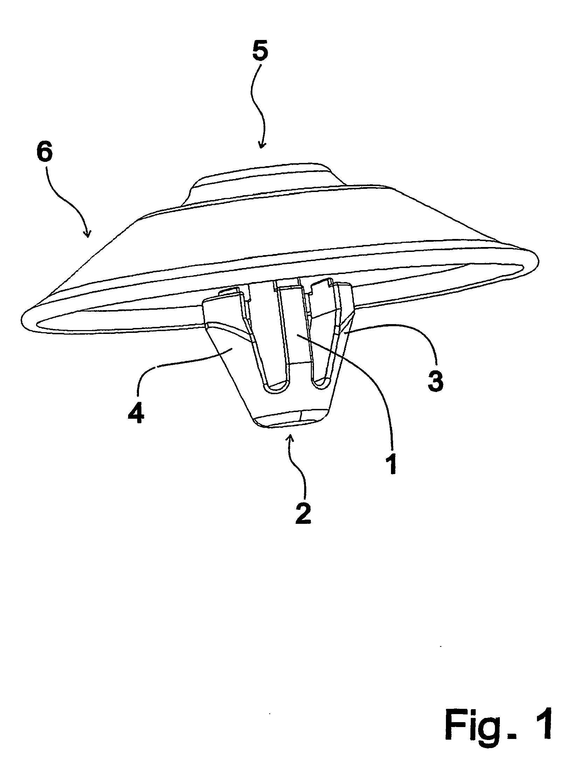

Fig. 1 zeigt in einer perspektivischen Ansicht ein Ausführungsbeispiel einer erfindungsgemäßen Vorrichtung, das über einen länglichen Schaft 1 verfügt. An einem Fußende 2 des Schaftes 1 sind bei dem dargestellten Ausführungsbeispiel zwei federnde Seitenarme 3, 4 einer Rastanordnung angesetzt, die sich beidseitig des Schaftes 1 und in einem seitlichen Abstand von diesem von dem Fußende 2 wegweisend in Richtung eines Kopfendes 5 des Schaftes 1 erstrecken.

Die erfindungsgemäße Vorrichtung ist weiterhin mit einem trichterartigen Abdeckschirm 6 ausgebildet, der bei dem dargestellten Ausführungsbeispiel im Bereich des Kopfendes 5 mit dem Schaft 1 verbunden ist. Der Abdeckschirm 6 ist bei dem dargestellten Ausführungsbeispiel rundlich ausgebildet und in Richtung des Fußendes 2 geöffnet.

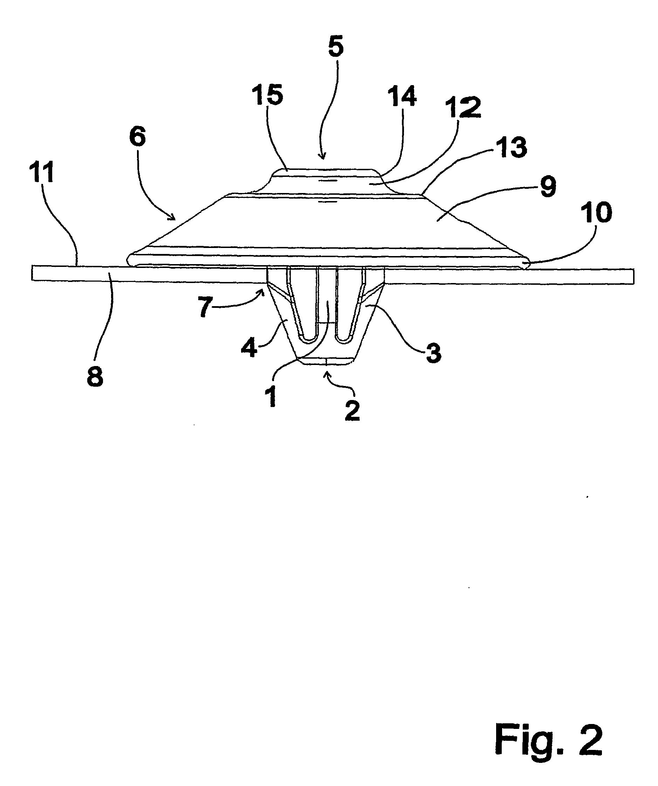

Fig. 2 zeigt das Ausführungsbeispiel gemäß Fig. 1 in einer Seitenansicht. In der Anordnung gemäß Fig. 2 ist der Schaft 1 der Vorrichtung in eine Ausnehmung 7 eines Trägerteiles 8 eingefügt, und die Seitenarme 3, 4 stehen vor dem Eingriff mit einem Trägerteil 8. Aus Fig. 2 ist ersichtlich, dass der Abdeckschirm 6 über einen umlaufenden, den Abdeckschirm 6 radial außenseitig abschließenden Außenabschnitt 9 verfügt, an dem am Außenrand eine verdickte Rand wulst 10 ausgebildet ist, die in der Anordnung gemäß Fig. 2 in einem Auflagebereich an einer Auflageseite 11 des Trägerteiles 8 aufliegt.

Aus Fig. 2 lässt sich entnehmen, dass sich an den Außenabschnitt 9 ein umlaufender Verformungsabschnitt 12 anschließt, der sich von einer den Außenabschnitt 9 radial innenseitig begrenzenden äußeren Umfangslinie 13 bis zu einer den Verformungsabschnitt 12 radial innenseitig begrenzenden inneren Umfangslinie 14 erstreckt. In dem unbelasteten Zustand gemäß Fig. 2 erstreckt sich der Verformungsabschnitt 12 im Bereich der äußeren Umfangslinie 13 gegenüber dem Außenabschnitt 9 unter Ausbilden eines Absatzes mit einem kleineren Winkel in Richtung der Längsrichtung des Schaftes 1 als der Außenabschnitt 9, wobei dieser Winkel mit radial zunehmenden Abstand von der äußeren Umfangslinie 13 wieder zunimmt.

Weiterhin ist der Abdeckschirm 6 mit einem tellerartigen Innenabschnitt 15 ausgebildet, der innenseitig der inneren Umfangslinie 14 angeordnet und mit dem Schaft 1 verbunden ist. In diesern unbelasteten Zustand steht der Innenabschnitt 15 axial über den Außenabschnitt 9 über. Dadurch lässt sich der Schaft 1 bei Ausüben einer axial in Richtung des Trägerteiles 8 wirkenden Einfügekraft in axialer Richtung über einen verhältnismäßig großen Verschiebeweg bewegen.

Der Außenabschnitt 9 des Abdeckschirmes 6 ist verhältnismäßig steif ausgebildet. Der Verformungsabschnitt 12 hingegen weist eine gegenüber dem Außenabschnitt 9 geringere Steifigkeit auf, während der Innenabschnitt 15 wiederum über eine gegenüber dem Verformungsabschnitt 12 höhere Steifigkeit verfügt. Dabei ist die erfindungsgemäße Vorrichtung vorzugsweise insgesamt, wenigstens jedoch der Abdeckschirm 6, aus einem einheitlichen Kunststoffmaterial hergestellt.

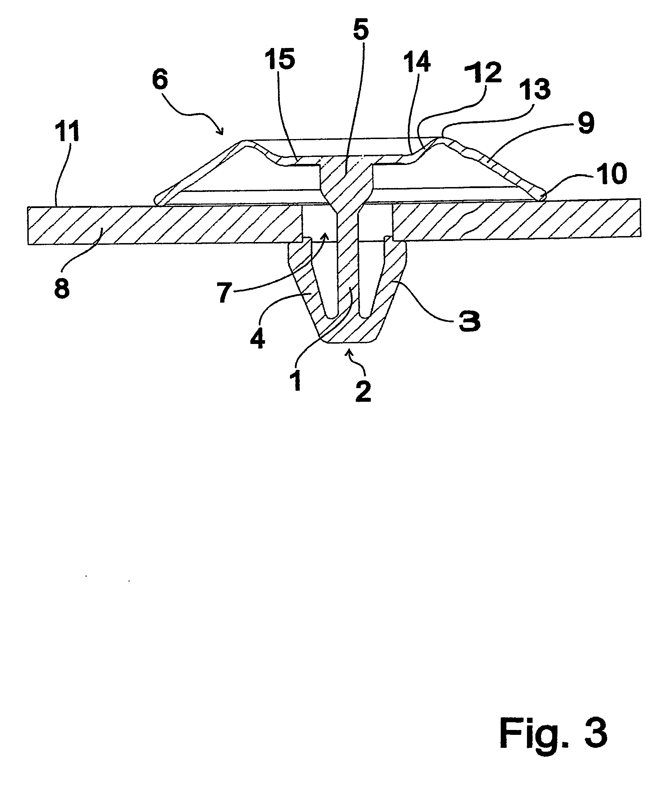

Fig. 3 zeigt das Ausführungsbeispiel gemäß Fig. 1 und Fig. 2 im Schnitt im Eingriff der Seitenarme 3, 4 mit dem Trägerteil 8. Aus Fig. 3 ist ersichtlich, dass bei dem dargestellten Ausführungsbeispiel die Material stärke des Verformungsabschnittes 12 wenigstens abschnittsweise geringer ist als die des Außenabschnittes 9 und auch als die des Innenabschnittes 15. Weiterhin lässt sich Fig. 3 entnehmen, dass bei dem dargestellten Ausführungsbeispiel die Materialstärke von der äußeren Umfangslinie 13 bis zu der Randwulst 10 kontinuierlich zunimmt, so dass die Steifigkeit des Außenabschnittes 9 außenseitig am größten ist.

Nachdem somit ausgehend von der in Fig. 2 dargestellten unbelasteten Anordnung auf den Innenabschnitt 15 eine axial in Richtung des Trägerteiles 8 wirkende Einfügekraft ausgeübt worden ist, bis die Seitenarme 3, 4 das Trägerteil 8 hintergreifen, ist in dieser belasteten Anordnung der gegenüber dem Außenabschnitt 9 weniger steife und damit leichter deformierbare Verformungsabschnitt 12 gegenüber der Fig. 2 dargestellten Anordnung radial nach innen umgebogen, so dass der Innenabschnitt 15 zwischen der äußeren Umfangslinie 13 und der Randwulst 10 angeordnet ist.

Durch die erfindungsgemäße Ausgestaltung des Abdeckschirmes 6 erfolgt die Verformung des Abdeckschirmes 6 bei Ausüben auch verhältnismäßig hoher Einfügekräfte, wie dies beispielsweise bei verhältnismäßig dicken Trägerteilen 8 der Fall ist, definiert in dem relativ leicht verformbaren, flexiblen Verformungsabschnitt 12, während der hierzu relativ steife Außenabschnitt 9 nicht oder nur sehr wenig verformt und weiterhin eine sprunghafte Änderung seiner trichterartigen Gestalt mit einem Umbiegen und Abstehen der Randwulst 10 von der Auflageseite 11 verhindert ist.

## Patentansprüche

1. Vorrichtung zum Abdecken einer Ausnehmung in einem Trägerteil (8) mit einem durch die Ausnehmung (7) durchführbaren Schaft (1), mit einem Abdeckschirm (6), der mit dem Schaft (1) in Verbindung steht und diesen seitlich überragt, und mit einer Rastanordnung (3, 4), die mit dem Schaft (1) in Verbindung steht, wobei die Rastanordnung (3, 4) so eingerichtet ist, dass sie bei Einwirken einer axialen Kraft auf den Schaft (1) mit dem Trägerteil (8) in Eingriff kommt und der Abdeckschirm (6) in einem Auflagebereich an einer Auflageseite (11) des Trägerteiles (8) anliegt, wobei der Abdeckschirm (6) einen steifen umlaufenden Außenabschnitt (9) aufweist und über einen zwischen dem Außenabschnitt (9) sowie dem Schaft (1) angeordneten umlaufenden Verformungsabschnitt (12) verfügt, der eine geringere Steifigkeit als der Außenabschnitt (9) aufweist, **dadurch gekennzeichnet, dass** der Abdeckschirm (6) trichterartig ausgebildet sowie in Richtung eines Fußendes (2) des Schafts (1) geöffnet ist und dass zwischen dem Verformungsabschnitt (12) und dem Schaft (1) ein umlaufender steifer Innenabschnitt (15) ausgebildet ist, dessen Steifigkeit größer als die Steifigkeit der Verformungsabschnittes (12) ist.

2. Vorrichtung nach Anspruch 1, **dadurch gekennzeichnet, dass** der Abdeckschirm (6) aus einem einheitlichen Kunststoffmaterial ist.

3. Vorrichtung nach Anspruch 1 oder Anspruch 2, **dadurch gekennzeichnet, dass** der Verformungsabschnitt (12) eine geringere Materialstärke als der Außenabschnitt (9) aufweist.

4. Vorrichtung nach einem der Ansprüche 1 bis 3, **dadurch gekennzeichnet, dass** die Materialstärke des Außenabschnittes (9) von radial innen nach radial außen kontinuierlich zunimmt.

5. Vorrichtung nach einem der Ansprüche 1 bis 4, **dadurch gekennzeichnet, dass** in einem unbelasteten Zustand der Innenabschnitt (15) axial über den Außenabschnitt (9) vorsteht.

## Claims

1. Device for covering a recess in a support member (8), comprising a shaft (1) which can be passed through the recess (7) and a cover shield (6) connected to the shaft (1) and overhanging it laterally, and having a locking arrangement (3, 4) connected to the shaft (1), wherein the locking arrangement (3, 4) is configured so that, when an axial force acts on the shaft (1), the locking arrangement (3, 4) comes into engagement with the support member (8) and the cover shield (6) lies against the contact side (11) of the support member (8) in a contact region, wherein the cover shield (6) has a rigid peripheral outer section (9) and, arranged between the outer section (9) and the shaft (1), a peripheral deforming section (12), which has less rigidity than the outer section (9), **characterised in that** the cover shield (6) is formed funnel-shaped and opens in the direction toward a foot end (2) of the shaft (1) and that formed between the deforming section (12) and the shaft (1) is a peripheral rigid inner section (15) whose rigidity is greater than the rigidity of the deforming section (12).

2. Device according to claim 1, **characterised in that** the cover shield (6) is made from a uniform plastics material.

3. Device according to claim 1 or claim 2, **characterised in that** the deforming section (12) has a smaller material thickness than the outer section (9).

4. Device according to one of the claims 1 to 3, **characterised in that** the material thickness of the outer section (9) increases continuously from radially inwardly to radially outwardly.

5. Device according to one of the claims 1 to 4, **characterised in that,** in an unloaded condition, the inner section (15) projects axially above the outer section (9).

## Revendications

1. Dispositif d'obturation d'un évidement ménagé dans un élément faisant office de support (8), comprenant une tige (1) destinée à être introduite dans l'évidement (7), d'un parapluie d'obturation (6), qui est raccordé à la tige (1) et qui s'étend au-dessus de celle-ci dans le plan latéral, et d'un agencement d'accrochage en prise d'encastrement (3, 4) qui fait partie intégrante de la tige (1), l'agencement d'accrochage en prise d'encastrement (3, 4) étant en l'occurrence étudié de telle façon que, lorsqu'un effort est exercé dans le plan axial sur la tige (1), il vient s'engager en prise d'encastrement avec l'élément faisant office de support (8) et le parapluie d'obturation (6) vient s'appliquer, au niveau d'une portion formant assise, sur une face d'appui (11) de l'élément faisant office de support (8), le parapluie d'obturation (6) comportant en l'occurrence une portion périphérique extérieure rigide (9) et étant muni d'une portion annulaire capable de se déformer (12) se situant entre la portion extérieure (9) et la tige (1), dont la rigidité est légèrement plus réduite que celle de la portion extérieure (9), **caractérisé en ce que** le parapluie d'obturation (6) a la forme d'un entonnoir et est ouvert dans la direction de l'extrémité formant pied (2) de la tige (1) et **en ce qu'**il est prévu entre la portion capable de se déformer (12) et la tige (1) une portion intérieure périphérique rigide (15), dont la rigidité est plus importante que la rigidité de la portion capable de se déformer (12).

2. Dispositif selon la revendication 1, **caractérisé en ce que** le parapluie d'obturation (6) est réalisé dans une seule et même matière plastique.

3. Dispositif selon la revendication 1 ou la revendication 2, **caractérisé en ce que** l'épaisseur de la portion capable de se déformer (12) est plus faible que celle de la portion extérieure (9).

4. Dispositif selon l'une des revendications 1 à 3, **caractérisé en ce que** l'épaisseur de la portion extérieure (9) augmente selon une progression continue de l'intérieur dans le plan radial vers l'extérieur dans le plan radial.

5. Dispositif selon l'une des revendications 1 à 4, **caractérisé en ce que** lorsque celui-ci n'est pas sollicité, la portion intérieure (15) fait saillie dans le plan axial au-dessus de la portion extérieure (9).
